# EUROPEAN PATENT SPECIFICATION

(11) **EP 2 604 499 B1**
(45) Date of publication and mention of the grant of the patent: **30.03.2016**
(21) Application number: 12188771.5
(22) Date of filing: 17.10.2012
(51) Int. Cl.: B62M 6/45

(54) **Electric power assisted bicycle**
Fahrrad mit elektrischer Unterstützung
Bicyclette à commande assistée électrique

(30) Priority: 12.12.2011 JP 2011271586
(43) Date of publication of application: 19.06.2013
(73) Proprietor: Honda Motor Co., Ltd., Tokyo 107-8556 (JP)
(72) Inventor: Shinagawa, Masataka, Saitama, 351-0193 (JP)
(74) Representative: Beder, Jens

(56) References cited:
- WO-A1-01/30643
- DE-A1- 10 243 751
- JP-A- 4 321 482
- JP-A- 9 290 795
- US-A1- 2004 206 563
- US-A1- 2009 102 408

## Description

### TECHNICAL FIELD

The present invention relates to an electric power assisted bicycle provided with a motor for assisting a driving force based on a pedaling force in relation to the pedaling force generated when an operator works pedals, and more particularly to the electric power assisted bicycle which allows an assist by the motor to be efficiently provided at high rotation speeds of the pedals.

### BACKGROUND ART

The electric power assisted bicycle is comprised of a pedaling force sensor for detecting the pedaling force generated at a pedal, a motor for assisting a driving force in response to an output of the pedaling force sensor, a crank angle sensor for detecting an angle of a crankshaft connected to the pedal, and a crank rotational frequency sensor for detecting the rotational frequency of the crankshaft.

As shown in a patent reference 1, for example, there is disclosed the structure that determines a rotation cycle of the crankshaft and generates assist torque at a value multiplying an inputted pedaling force by a predetermined value so as to prevent a loose feeling of torque in the vicinity of zero pedaling force by minimizing the cycle fluctuation of detected torque and lowering a driving current of the motor.

### PRIOR ART REFERENCE

Patent reference 1: Japanese patent application laid open publication No. 2004-314753.

### DISCLOSURE OF THE INVENTION

### PROBLEM TO BE SOLVED BY THE INVENTION

However, according to the above structure, though the torque (input torque) applied to the pedaling force is provided in proportion to the rotation cycle, a phase difference develops between the rotation cycle and the input torque at the high rotation speeds or the like when the rotational frequency of the crankshaft is increased.

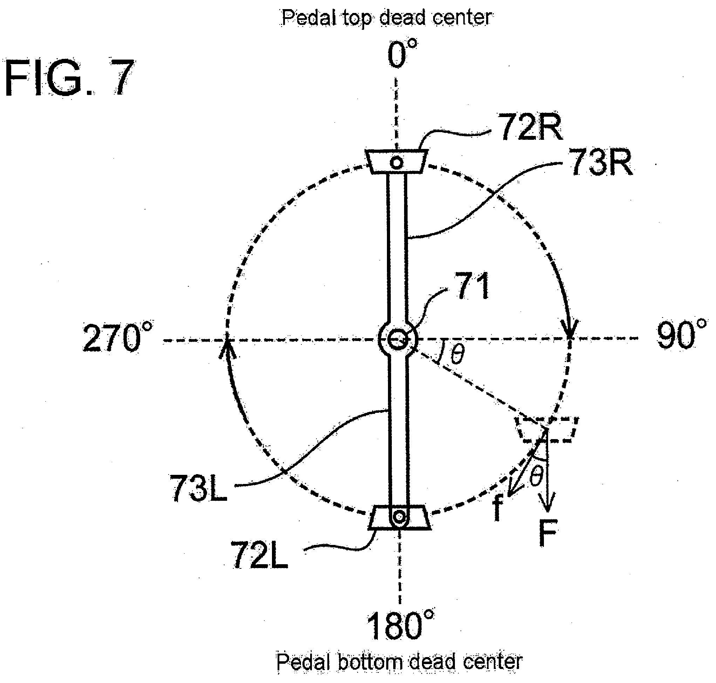

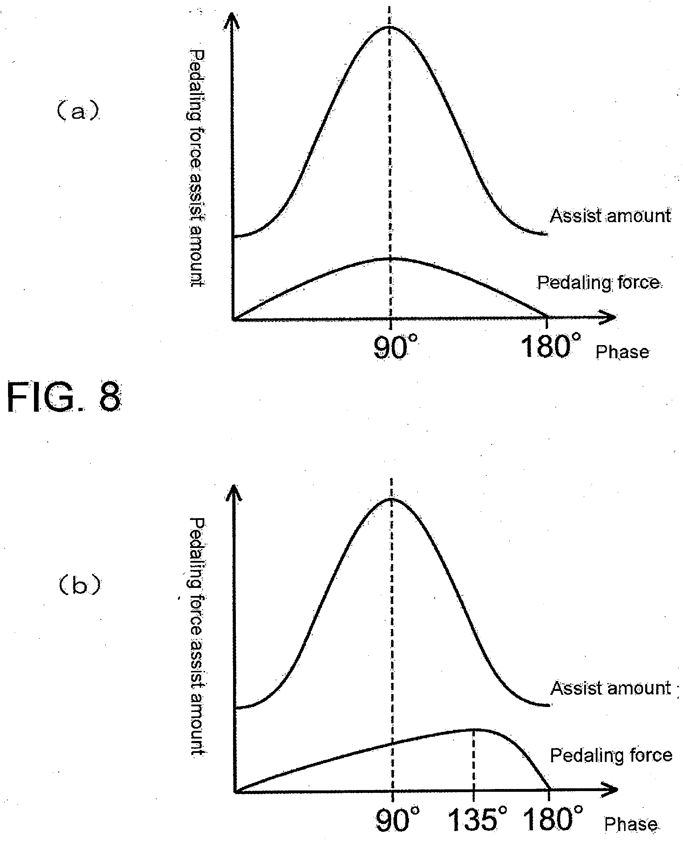

For example, the pedaling of the bicycle in the case where the top dead center of a pedal relative to a crankshaft 71 as shown in FIG. 7 is 0 (zero) degree has such a relationship that at low rotation speeds of the crankshaft a human pedaling force (a vertical axis) relative to a horizontal axis showing a crank angle (a phase) indicates a peak value at 90 degrees, as shown in FIG. 8(a). On the other hand, at the high rotation speeds of the crankshaft 71, the peak value of the pedaling force is detected close to 135 degrees of the crank angle since the pedaling force that the human applies to the pedal has a tendency to be delayed unconsciously at the high rotation speeds of the crankshaft 71, as shown in FIG. 8(b).

In the case where the assist in the pedaling force in response to the rotation cycle is performed when the peak value of the pedaling force is delayed, the torque peak value based on a composition of the pedaling force and the assist driving force is more delayed than 90 degrees. Therefore, there is the problem that the input torque by the motor is not able to be efficiently applied to the pedaling force thereby to decrease the pedal efficiency that assists the pedaling force.
A bicycle which is assisted by an electric motor having the features of the preamble of claim 1 is known from DE 102 43 751 A1. The electric motor assists a pedaling force which is supplied by a user to a crankshaft. In order to achieve the desired effect means for detecting the pedaling force are included in the bicycle as well as means to detect a crankshaft angle. The crank rotational frequency is calculated and when the calculated frequency is not less than a predetermined value and in response to a phase of the detected crank angle the motor generates a driving force assist amount relative to the pedaling force on the basis of the control of an assist amount control section.

The present invention has been made in view of the above described circumstances, and it is an object of the present invention to provide an electric power assisted bicycle which has a mechanism for allowing input torque by a motor to be applied efficiently to a pedaling force even at the high rotation speeds of a crankshaft in the electric power assisted bicycle.

### MEANS FOR SOLVING THE PROBLEM

In order to achieve the above object, according to claim 1, there is provided an electric power assisted bicycle comprising a pedaling force sensor (2) for detecting the pedaling force generated at a pedal, a motor (5) for assisting a driving force in response to an output of the pedaling force sensor (2), a crank angle sensor (3) for detecting a crank angle of a crankshaft connected to the pedal, a crank rotational frequency calculating means (14) for calculating a rotational frequency of the crankshaft from the crank angle, and an assist amount control section (10) for allowing the motor (5) to generate a driving force assist amount configured relative to the pedaling force (a rotation torque value f of the crankshaft) detected by the pedaling force sensor (2), in response to a phase of the crank angle detected by the crank angle sensor (3) when the crank rotational frequency calculated through the crank rotational frequency calculating means (14) is not less than a predetermined value (a second threshold value).

The driving force assist amount provided for the pedaling force is configured such that composite torque of the driving force assist amount and the pedaling force causes a torque peak value in a phase of 90 degrees when a top dead center of the pedal based on the crankshaft is 0 (zero) degree.

The driving force assist amount is applied in such a condition of the driving force assist amount and the phase that in the case where an intermediate position between the top dead center of the pedal and a bottom dead center of the pedal has a phase difference from the torque peak value when detecting a torque curve of the pedaling force in a previous rotation of the crankshaft, the torque peak value of the composite torque cancels the phase difference.

According to claim 2, in an electric power assisted bicycle as set forth in claim 1, the assist amount control section continuously performs configuration of the driving force assist amount when there is the aforementioned phase difference.

According to claim 3, in an electric power assisted bicycle as set forth in claim 1, the driving force assist amount is configured by a phase which is determined in accordance with a map memorizing a relationship between the crank rotational frequency and the phase and by the driving force which is calculated based on the pedaling force (the rotation torque value f of the crankshaft).

According to claim 4, in an electric power assisted bicycle as set forth in claim 1, the assist amount control section comprises a means for verifying a misdetection of the phase difference. At the time of verification of the misdetection, the driving force assist amount in proportion to the pedaling force calculated by the pedaling force sensor (for example, a sensor detected pedaling force or a pedaling force effective value) is generated in response to the phase of the crank angle detected by the crank angle sensor.

According to claim 5, in an electric power assisted bicycle as set forth in claim 1, the assist amount control section generates the driving force assist amount in proportion to the pedaling force calculated by the pedaling force sensor (for example, a sensor detected pedaling force or a pedaling force effective value) in response to the phase of the crank angle detected by the crank angle sensor.

### EFFECTS OF THE INVENTION

According to the structure of claim 1, since, at the high rotation speeds, the driving force assist amount configured for the pedaling force (the rotation torque value f of the crankshaft) is applied in response to the phase, a correction at the time of generation of the torque peak value is performed relative to the pedaling force so as to eliminate the discrepancy in a cycle input, and the driving force providing an direct feeling more can be applied relative to an input of the assist amount at the low rotation speeds.

Since the driving force assist amount is configured such that the composite torque of the driving force assist amount and the pedaling force causes the torque peak value at the phase of 90 degrees when the pedal top dead center based on the crankshaft is 0 (zero) degree, the torque peak value can be configured in the phase having the most need of the pedaling and the ideal assist of the driving force by the motor can be performed at the high rotation speeds.

The driving force assist amount is applied in such condition of the driving force assist amount and the phase that in the case where the intermediate position between the pedal top dead center and the pedal bottom dead center has the phase difference from the torque peak value when detecting the torque curve of the pedaling force in the previous rotation of the crankshaft, the torque peak value of the composite torque cancels the phase difference. Therefore, the ideal assist of the driving force by the motor can be performed at the high rotation speeds of the crankshaft.

According to the structure of claim 2, since an input of the assist amount is continuously executed when the phase of the torque peak value of the pedaling force has the phase difference relative to 90 degrees, it is possible to approach the ideal assist of the driving force by the motor.

According to the structure of claim 3, the driving force assist amount is configured by the phase which is determined in accordance with the map memorizing the relationship between the crank rotational frequency and the phase and by the driving force which is calculated based on the pedaling force (the rotation torque value f of the crankshaft). Therefore, the ideal assist of the driving force by the motor can be performed at the high rotation speeds of the crankshaft.

According to the structure of claim 4, since the assist amount control section comprises the means for verifying the misdetection of the phase difference, the assist of the driving force in a normal phase can be applied at the time of the verification of the misdetection.

According to the structure of claim 5, since the discrepancy between the cycle input and the ideal torque peak generation time is small in a region of the low crank rotational frequency, the driving force assist amount in proportion to the pedaling force calculated by the pedaling force sensor (for example, the sensor detected pedaling force or the pedaling force effective value) is provided in the assist amount control section. Therefore, the control can be carried out without impairing such a feeling as to be assisted at the same time that the pedal is worked.

### BRIEF DESCRIPTION OF THE DRAWINGS

FIG. 1 is a side explanatory view of an electric power assisted bicycle;
FIG. 2 is a block diagram of an assist driving force control device of the electric power assisted bicycle;
FIG. 3 is a block diagram of a driving force assist amount configuration means that makes up the assist driving force control device;
FIG. 4 is a flow chart for explaining configuration steps with respect to an assist phase and an assist amount in the driving force assist amount configuration means;
FIG. 5 is a graph showing a relationship between a torque curve of a pedaling force relative to a phase of a crankshaft and a torque curve of a driving force assist amount;
FIG. 6 is a flow chart showing verification steps in a phase difference misdetection verification means, wherein (a) corresponds to a feed-forward control and (b) corresponds to a feedback control;
FIG. 7 is a model diagram for explaining the phase of the crankshaft; and
FIG. 8(a) and (b) show a pedaling force torque curve relative to the phase of the crankshaft, wherein (a) is a graph at low rotation speeds and (b) is a graph at high rotation speeds.

### BEST MODE FOR CARRYING OUT THE INVENTION

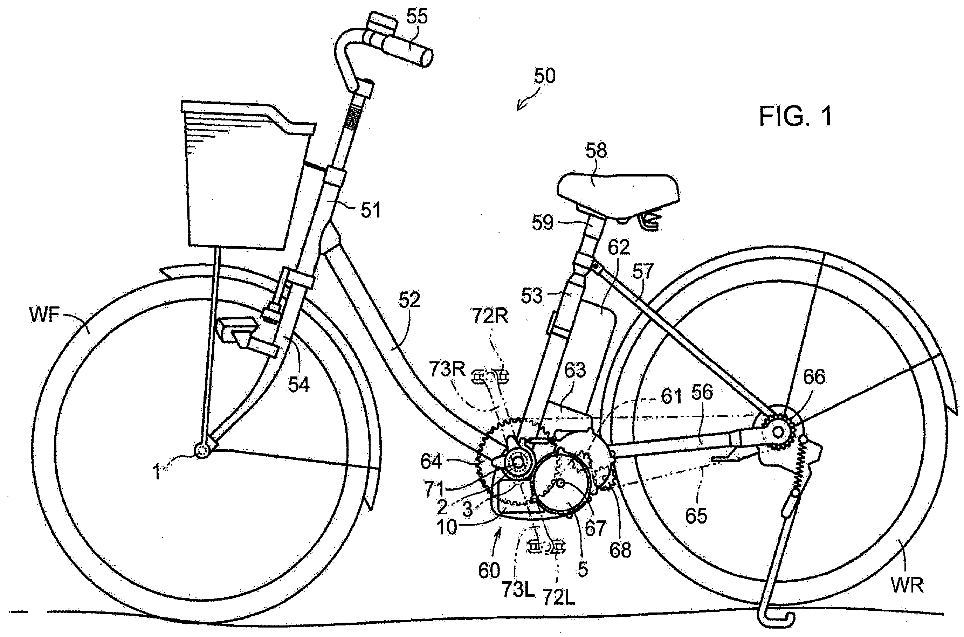

Hereinafter, one of embodiments of an electric power assisted bicycle according to the present invention will be described with reference to the accompanying drawings. FIG.1 is a side view of the electric power assisted bicycle provided with an assist driving force control device that is a distinguishing feature of the present invention. The assist driving force control device is a device for efficiently providing an assist of a driving force by a motor at high rotation speeds of a pedal, especially in such a situation as to continue pedaling at the high rotation.

The electric power assisted bicycle 50 has a head pipe 51 located in a forward portion of a body, a down frame 52 extending rearward and downward from the head pipe 51, and a seat pipe 53 extending upward from a rear end of the down frame 52. A downward extending front fork 54 is connected to the head pipe 51 in a steerable manner. On a lower end of the front fork 54 a front wheel WF is pivotally supported. The front wheel WF is provided with a vehicle speed sensor 1 for detecting a speed of the electric power assisted bicycle 50. A handle 55 is mounted on an upper portion of the head pipe 51.

On a rear end of the down frame, there is provided a rearward extending rear fork 56 while on a rear end of this rear fork 56 a rear wheel WR is pivotally supported. Moreover, between an upper portion of the seat pipe 53 and the rear end of the rear fork 56, there is provided a pair of left and right stays 57.

An assist drive unit 60 is supported on the down frame 52 and the rear fork 56. A seat post 59 having a seat 58 on an upper end thereof is fitted on the seat pipe 53 in such a manner that the upper and lower positions of the seat 58 can be adjusted. On the rear side of the seat pipe 53, a battery 62 for supplying an electric power to the assist drive unit 60 is detachably mounted on the stays 63 of the seat pipe 53.

A crankshaft 71 passes through the assist drive unit 60 and a sprocket (an output section) 64 so as to extend in a cross direction of the body. On both ends of the crankshaft 71 there are attached a crank 73L having a pedal 72L and a crank 73R having a pedal 72R. When an operator works the pedals 72L, 72R, rotation torque (a power) is applied to the crankshaft 71. The sprocket 64 is rotated by the rotation torque applied to the crankshaft 71, and the rotation of the sprocket 64 is transmitted through a chain 65 to a sprocket 66 on the side of the rear wheel WR thereby to rotate the rear wheel WR.

A pedaling force sensor (a magneto-striction type torque sensor) 2 for detecting a rotation torque value f applied to the crankshaft 71 is provided on the crankshaft 71. This pedaling force sensor 2 detects the rotation torque value f of the crankshaft 71 in a predetermined cycle.

The pedaling force (the rotation torque value f) applied to the crankshaft 71 by the operator is a component force in the rotational direction of the pedaling force F which is generated when the operator works the pedal 72, as shown in FIG. 7, and is different from the pedaling force (a pedaling force effective value) F which is actually applied to the pedal by the operator. The rotation torque value f and the pedaling force F can be expressed by a relational formula: the rotation torque value f = the pedaling force F x *cos θ.* When the operator works the pedals 72L, 72R, the pedals 72L, 72R are pressed in a vertical direction. Therefore, the direction of the pedaling force F is the vertical direction.

Further, in the vicinity of the crankshaft 71 there is fitted a crank angle sensor 3 for detecting a crank angle of the crank 73 connected to the crankshaft 71.

The assist drive unit 60 is configured to integrally holds within a casing a motor 5, a motor driving circuit (an operation driver) 6 for driving the motor 5, an assist amount control section 10 for carrying out a PWM control of the motor driving circuit on the basis of the rotation torque value f detected by the pedaling force sensor 2, and an assist sprocket 61 which is rotated by having the driving force transmitted from a motor driving shaft 67 of the motor 5. A chain 65 is attached to the assist sprocket 61, whereby the assist drive unit 60 transmits the driving force of the motor 5 to the aforementioned driving mechanism.

The assist control section 10 caries out the PWM control of the motor driving circuit (carries out an assist control) such that the motor 5 generates assist torque (an assist force) calculated based on the rotation torque value f detected by the pedaling force sensor 2.

The assist torque (the assist force) is calculated in different steps relative to the rotation torque value f between the high rotation speeds and the low rotation speeds of the crankshaft. Namely, at the high rotation speeds of the crankshaft, the assist torque is calculated based on the rotation torque value f, while at the low rotation speeds, the pedaling force (the pedaling force effective value) F which is applied by the operator to the pedal in the vertical direction is calculated from the rotation torque value f, so that the assist torque of a predetermined value relative to the pedaling force F is calculated. Particulars of the calculation steps with respect to the assist torque at the high rotation speeds and at the low rotation speeds of the crankshaft will be described later.

The assist torque generated by the motor 5 is transmitted through the assist sprocket 61 to the chain 65. Therefore, when the operator works the pedal 72L, 72R, the rotation torque f (the driving power) applied to the crankshaft 71 and the assist torque generated by the motor 5 are transmitted through the chain 65 to the sprocket 66 on the rear wheel side, whereby the rear wheel WR is rotated. By the way, behind the assist sprocket 61 there is provided an idler 68 for increasing a contact angle of the chain 65.

Further, the assist drive unit 60 has a mechanism which allows the sprocket 64 to be rotated when the pedals 72L, 72R are worked in the direction (the forward direction) that the electric power assisted bicycle 50 moves forward and which does not allows the sprocket 64 to be rotated when the pedals 72L, 72R are worked in the direction opposite to the forward direction.

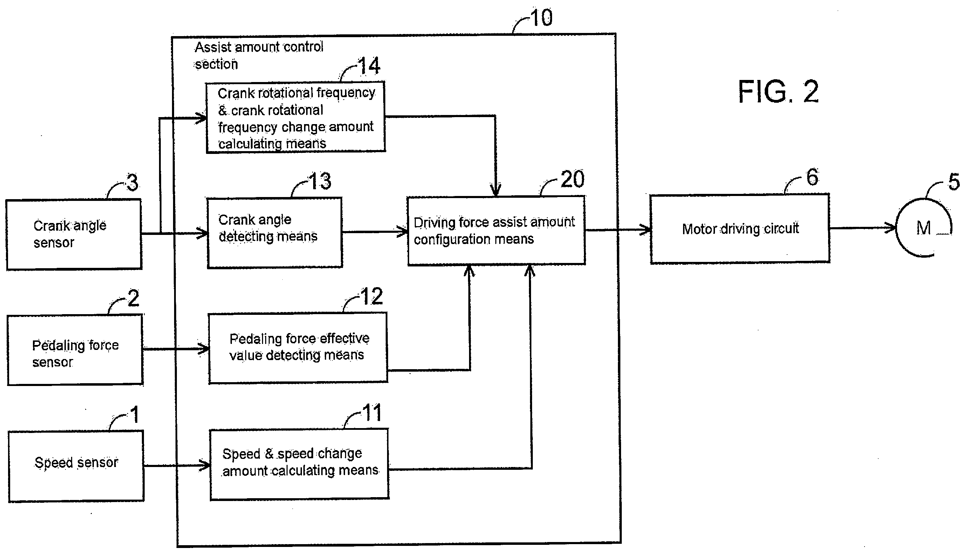

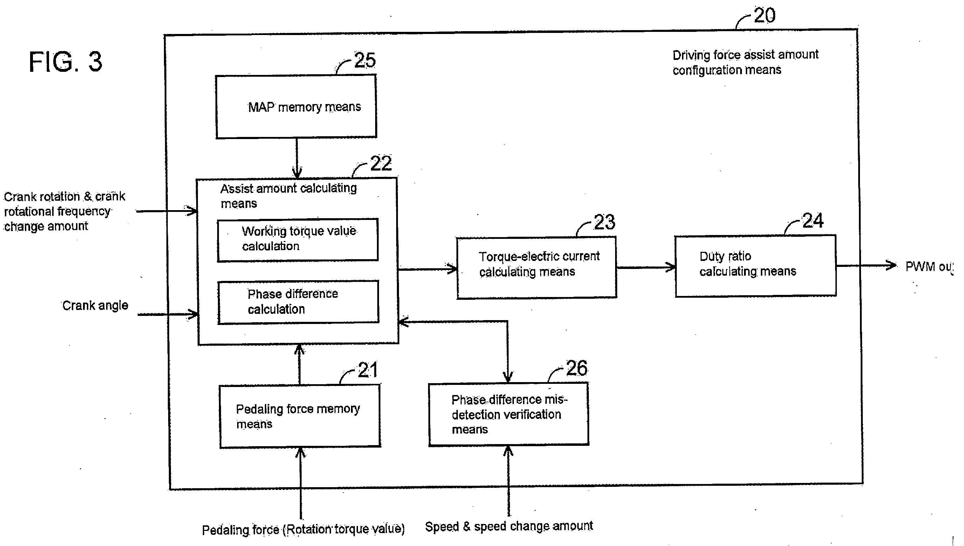

Next, the assist driving force control device of the electric power assisted bicycle will be described with reference to the block diagrams in FIG. 2 and FIG. 3.

This torque control device, as shown in FIG. 2, is comprised of a speed sensor 1 for detecting a speed of the electric power assisted bicycle, the pedaling force sensor 2 for detecting the pedaling force (the rotation torque value) generated in the pedal, the crank angle sensor 3 for detecting the angle of the crankshaft to which the pedals are connected, the motor 5 for assisting the driving force in response to an output of the pedaling force sensor 2, the assist amount control section 10 for controlling the assist amount of the driving force, and the motor driving circuit 6 for driving the motor 5 based on a driving signal from the assist amount control section 10.

The assist amount control section 10 is comprised of a speed and change amount calculating means 11 for calculating a speed and a change amount of the speed based on a signal from the speed sensor 1, a pedaling force effective value detecting means 12 for detecting the pedaling force effective value based on a signal from the pedaling force sensor 2, a crank angle detecting means 13 for detecting the crank angle based on a signal from the crank angle sensor 3, a crank rotational frequency and change amount calculating means 14 for calculating the crank rotational frequency and a change amount of the crank rotational frequency based on a signal from the crank angle sensor 3, and a driving force assist amount configuration means 20 for configuring the driving force assist amount based on the speed and the speed change amount from the speed and change amount calculating means 11, the rotation torque value and the pedaling force effective value from the pedaling force effective value detecting means 12, the crank angle from the crank angle detecting means 13, the crank rotational frequency and the change amount of the crank rotational frequency from the crank rotational frequency and change amount calculating means 14.

The speed and change amount calculating means 11 inputs the signal from the speed sensor 1 at intervals of a certain period to calculate the speed and calculates the change amount of speed at intervals of a certain time.

The crank angle detecting means 13 inputs the signal from the crank angle sensor 3 at intervals of a certain period to detect the crank angle at the present moment.

The crank rotational frequency and change amount calculating means 14 inputs the signal from the crank angle sensor 3 at intervals of a certain period to calculate the crank rotational frequency and calculates the change amount of crank rotational frequency at intervals of a certain time.

The pedaling force effective value detecting means 12 estimates and detects the pedaling force effective value F (the pedaling force actually applied by the operator to the pedals 72) that is the force operating downward in the vertical direction, from the pedaling force during traveling (the rotation torque value f that operates in the vertical direction relative to the crankshaft) detected by the pedaling force sensor 2. By the way, without providing the pedaling force effective value detecting means 12, it is possible to use simply an output value (a rotation torque value) of the pedaling force sensor 2.

The driving force assist amount configuration means 20, in response to the phase of the crank angle, configures the driving force assist amount that is a predetermined value relative to the rotation torque value detected by the pedaling force sensor 2 or relative to the pedaling force effective value calculated by the pedaling force effective value detecting means 12.

The driving force assist amount configuration means 20 is provided with a pedaling force memory means 21 for memorizing the pedaling force effective value generated on the pedals (or the output value of the pedaling force sensor 2), an assist amount calculating means 22 for calculating the pedaling force assist amount based on the crank rotation frequency, the crank angle, the rotation torque value or the pedaling force effective value, a torque-electric current value calculating means 23 for calculating an electric current value corresponding to the calculated driving force assist amount, a duty ratio calculating means 24 for calculating an duty ratio of the electric current value, and a phase difference misdetection verification means 26 (FIG. 3). The driving force assist amount configuration means 20 is comprised of CPU, for example, and each of the aforementioned means is executed based on a previously configured program or a hard circuit.

The pedaling force memory means 21 memorizes sequentially at intervals of a certain period the pedaling force (the rotation torque value) relative to several cycles of the crankshaft.

The assist amount calculating means 22, at the high rotation speeds of the crankshaft, detects a torque curve from the pedaling force in a previous rotation of the crankshaft, thereby calculating, in this torque curve, a phase difference of an intermediate position between a pedal top dead center and a pedal bottom dead center from a torque peak value, and calculates a working torque value necessary for the driving force assist amount (the driving force assist amount that is a predetermined value relative to the pedaling force) from the pedaling force (the rotation torque value). Namely, this working torque value is configured such that composite torque of the driving force assist amount and the pedaling force causes a torque peak value in a phase of 90 degrees when the pedal top dead center based on the crankshaft is 0 (zero) degree. A specific method of the calculation of the working torque value will be described hereunder.

The torque-electric current calculating means 23 inputs the working torque value thereby to calculate an electric current command value in response to the working torque value.

The duty ratio calculating means 24 calculates a duty ratio of a driving pulse thereby to output it as a PWM output to the motor driving circuit 6.

In the motor driving circuit 6, the torque control is performed in response to the PWM output to drive the motor 5. The motor driving circuit 6 has each switching element of multiple phases (three phases of UVW), and the assist control section 10 performs ON/OFF control of each switching element of the UVW phase at a predetermined duty ratio thereby to PWM control the motor driving circuit 6. Based on this PWM control, the motor driving circuit 6 converts a direct current power of the battery 62 to a three-phase alternating current power and passes a three-phase alternating current through a U-phase stator coil, a V-phase stator coil and a w-phase stator coil of the motor 5 so as to rotate the motor driving shaft 67 of the motor 5.

A MAP memory means 25 estimates and provides an assist phase in the case of applying the driving force assist in the assist amount calculating means 22, and a map that previously configures a relationship between the rotational frequency and the phase is memorized therein.

The phase difference misdetection verification means 26 is configured to recognize the misdetection of the phase difference when the estimated assist phase is a value that is theoretically impossible. The verification whether it is misdetection or not is executed in such a way as to judge whether the phase difference of 90 degrees or more develops in the assist phase relative to the detected phase of the crank angle, for example. Then, in the case where there is the phase difference of 90 degrees or more, the misdetection is recognized. In this case, the verification judgment may be made by setting the threshold value for the misdetection at 90 degrees.

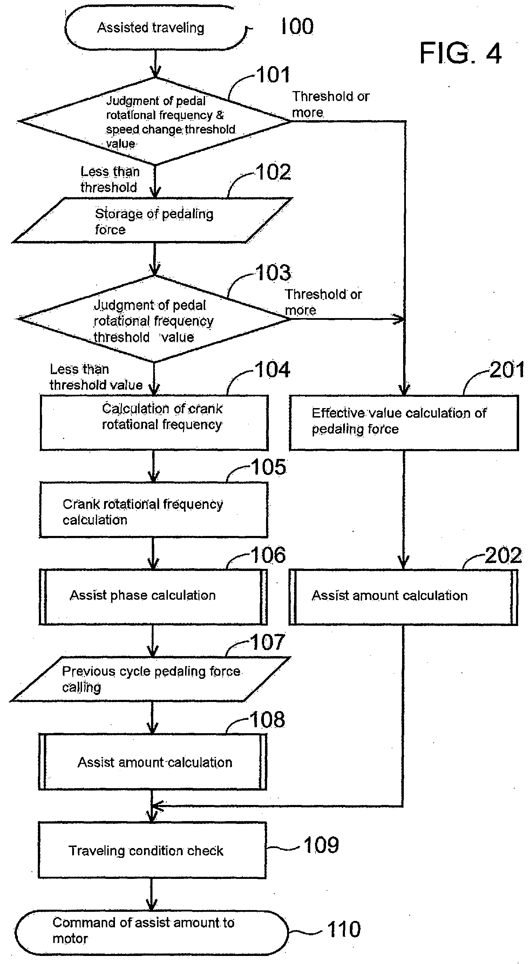

Next, the steps of configuring the driving force assist amount by the driving force assist amount configuration means 20 will be described with reference to FIG. 4.

When a mode of an assist traveling is selected at the time of traveling of the electric power assisted bicycle (step 100), firstly the pedal rotational frequency change amount inputted from the crank rotational frequency and change amount calculating means 14 or the speed change amount inputted from the speed and speed change amount calculating means 11 is compared with a first threshold value configured at the predetermined value (step 101). Since, when this value (change amount) is not less than the first threshold value, there is assumed the case where the pedals are not worked successively at the high rotation speed or the case where the speed is reduced by the braking operation, it is judged that it is not suitable for the control at the high rotation speeds of the pedal, so that an assist control (a normal assist control) under normal conditions (at the low rotation speeds) is carried out.

In the normal assist control, the pedaling force effective value is calculated (step 201), and the assist amount in proportion to the pedaling force effective value is calculated through a pedaling force proportional control (step 202), so that the driving force (the working torque value) is applied at the torque peak value in proportion to the pedaling force effective value. Moreover, in the case of the normal assist control, when only the output value (the rotation torque value) of the pedaling sensor 2 is used without using the pedaling force effective value, the driving force (the working torque value) is applied at the torque peak value in proportion to the rotation torque value.

Further, in the normal assist control, the assist amount may be calculated by the speed proportional control as a substitute for the pedaling force proportional control.

On the other hand, when the pedal rotational frequency or the change amount of the speed is less than the first threshold value, the pedaling force (the rotation torque value) detected by the pedaling force sensor 2 is stored in the pedaling force memory means 21 (step 102).

Next, the comparison is performed between the pedal rotational frequency (the crank rotational frequency) which is sequentially inputted from the crank rotational frequency calculating means 14 and a second threshold value (step 103). The second threshold value (a pedal rotational frequency) is set at 70 rotations per minute which does not occur in the normal traveling, for example.

When the pedal rotational frequency is less than the second threshold value, it is judged that the pedals are not rotated at the high rotation speed, so that the assist control at the time of the normal condition (at the low rotation speeds) is performed (steps 201 and 202).

When the pedal rotational frequency is not less than the second threshold value, it is judged that the pedals are rotated at the high rotation speed, so that first the crank angle at the present moment is detected (step 104). Then, the crank rotational frequency is calculated (step 105).

Next, the calculation of the phase (the assist phase) to apply the driving force, based on the detected crank angle and crank rotational frequency (step 106), a calling of the pedaling force (the rotation torque value) in the previous rotation (step 107) and the calculation of the assist amount (step 108) are carried out in serious processing.

For example, in the case of feed forward control in which the assist phase is estimated by the map of the rotational frequency-phase, for example, the assist phase corresponding to the crank rotational frequency is found by using the map of the MAP memory means 25, from the detected crank rotational frequency, thereby to find the assist amount of the driving force assist by a predetermined calculation formula. The assist phase and the assist amount in this case are configured such that the composite torque of the driving force assist amount and the pedaling force causes the torque peak value at the phase of 90 degrees (270 degrees) when the pedal top dead center based on the crank shaft 71 is 0 (zero) degree.

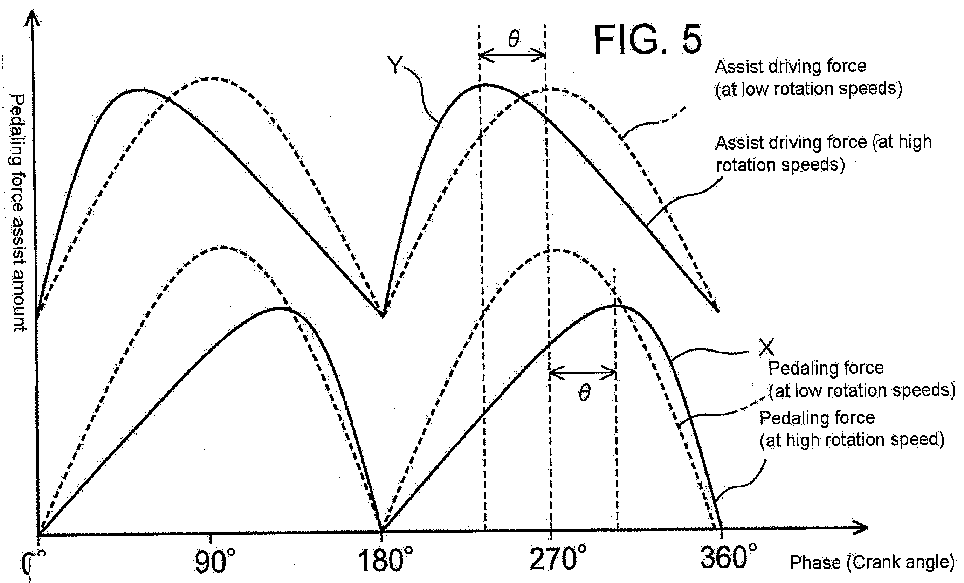

Further, in the case of the feedback control that the assist phase and the assist amount are determined in consideration of the pedaling force (the rotation torque value) generated in the previous cycle, when the torque curve based on the pedaling force in the previous cycle (0∼360 degrees) is a curve X as shown in FIG. 5 at the high rotation speeds of the crankshaft, for example, the driving force assist amount is controlled to be applied in such a condition of the driving force (the assist amount) and the phase (each assist phase of 0∼360 degrees) that, at the time of assisting the driving force in the next cycle (0∼360 degrees), when there is the phase difference θ relative to the torque curve X of the pedaling force between the torque peak value and the intermediate position between the pedal top dead center and the pedal bottom dead center, the torque peak value of the composite torque of the torque curve X and a torque curve Y of the assist driving force cancels the phase difference *θ*.

In the case where the motor drive is performed by the driving force assist amount and the phase calculated through the feed forward control and the feed back control, a traveling condition check is performed for judging whether the assist amount relative to the speed is suitable (step 109), and the assist amount is commanded through the motor driving circuit 6 to the motor 5 thereby allowing the motor 5 to be driven. In the traveling condition check, for example, there is judged whether it comes under such an original configuration that the assist is not carried out in the case where the speed is over the certain level (or that the assist amount is suitable relative to the speed), etc.

Moreover, in the assist amount control section 10, when there is the phase difference in the torque peak value relative to the torque curve of the pedaling force in the previous cycle, the configuration and application of the driving force assist amount are continuously executed.

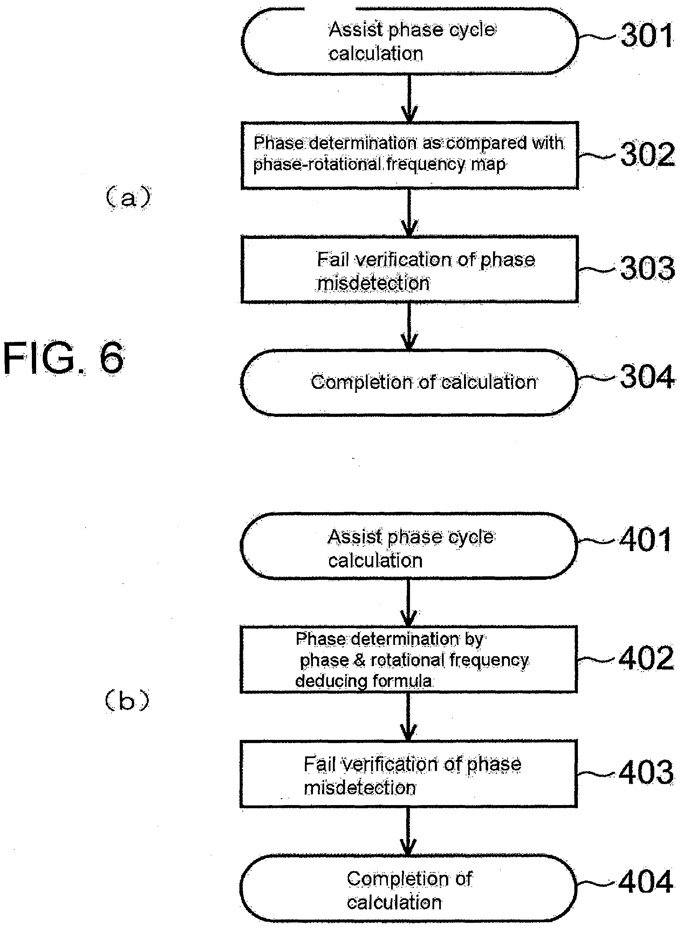

Next, the verification steps by the phase difference misdetection verification means 26 in each of the feed forward control and the feed back control will be described with reference to FIG. 6(a) and (b).

In the case of the feed forward control, as shown in FIG. 6(a), when performing an assist phase cycle calculation based on the crank angle detection (step 301), the map of the MAP memory means 25 is used to detect a corresponding phase from the detected crank rotational frequency (step 302). When this assist phase has a phase of the threshold value or more (for example, 90 degrees) relative to the detected crank angle, it is verified as a phase difference misdetection (step 303) to finish the calculation of the assist phase (step 304), so that the normal assist (the normal assist control) is performed at the phase of the detected crank angle.

Namely, at the time of the verification of misdetection, the assist amount of the driving force in proportion to the pedaling force effective value calculated by the pedaling force effective value detecting means 12 is generated in response to the phase of the crank angle detected by the crank angle detecting means 13.

In the case of the feed back control, as shown in FIG. 6(b), when performing an assist phase cycle calculation based on the crank angle detection (step 401), the assist phase is found from the detected crank rotational frequency by the predetermined calculation formula such that the composite torque of the driving force assist amount and the pedaling force causes the torque peak value in a phase of 90 degrees (the intermediate position between the pedal top dead center and the pedal bottom dead center) when the pedal top dead center based on the crankshaft is 0 (zero) degree (step 402), as described with reference to FIG. 5. When this assist phase has a phase of the threshold value or more (for example, 90 degrees) relative to the detected crank angle, it is verified as a phase difference misdetection (step 403) to finish the calculation of the assist phase (step 404), so that the normal assist (the normal assist control) is performed at the phase of the detected crank angle.

Namely, at the time of the verification of misdetection, the assist amount of the driving force in proportion to the pedaling force effective value calculated by the pedaling force effective value detecting means 12 is generated in response to the phase of the crank angle detected by the crank angle detecting means 13.

According to the above described electric power assisted bicycle, when the crank rotational frequency detected by the crank rotational frequency calculating means 14 is not less than the second threshold value (70 rotations per minute), the assist phase is configured in response to the phase of the crank angle detected by the crank angle sensor 3, and the driving force assist amount that is the predetermined value calculated by the predetermined formula, relative to the pedaling force (the rotation torque value f) calculated by the pedaling force sensor 2 is generated in the motor 5. Therefore, as described with reference to FIG. 5, the composite torque of the driving force assist amount and the pedaling force can be configured to cause the torque peak value in a phase of 90 degrees (the intermediate position between the pedal top dead center and the pedal bottom dead center) when the pedal top dead center based on the crankshaft 71 is 0 (zero) degree, so that the ideal assist of the driving force by the motor can be performed at the high rotation speeds, thereby making it possible to show proper pedal efficiency.

### DESCRIPTION OF REFERENCE CHARACTERS

1: Speed sensor, 2: Pedaling force sensor, 3: Crank angle sensor, 5: Motor, 6: Motor driving circuit, 10: Assist amount control section, 11: Speed and change amount calculating means, 12: Pedaling force effective value detecting means, 13: Crank angle detecting means, 14: Crank rotational frequency and change amount calculating means, 20: Driving force assist amount configuration means, 25: MAP memory means, 26: Phase difference misdetection verification means, 50: Electric power assisted bicycle, 60: Assist drive unit, 61: Assist sprocket, 67: Motor driving shaft, 71: Crankshaft, 72: Pedal, 73: Crank, f: Rotation torque value, F: Pedaling force effective value.

## Claims

1. An electric power assisted bicycle comprising:
a pedaling force sensor (2) for detecting a pedaling force generated at a pedal;
a motor (5) for assisting a driving force in response to an output of said pedaling force sensor (2);
an assist amount control section (10) for allowing said motor (5) to generate a driving force assist amount configured relative to the pedaling force detected by said pedaling force sensor (2), in response to a phase of a crank angle, when a crank rotational frequency is not less than a predetermined value, wherein the driving force assist amount provided for the pedaling force is configured such that composite torque of the driving force assist amount and the pedaling force causes a torque peak value in a phase of 90 degrees when a top dead center of said pedal based on said crankshaft is 0 degree;
**characterized in that**
the electric power assisted bicycle further comprises:
a crank angle sensor (3) for detecting said crank angle of a crankshaft connected to said pedal;
a crank rotational frequency calculating means (14) for calculating said rotational frequency of said crankshaft from the crank angle; and that
the driving force assist amount is applied in such a condition of the driving force assist amount and the phase that in the case where the torque peak value has a phase difference relative to an intermediate position between the top dead center of said pedal and a bottom dead center of said pedal when detecting a torque curve of the pedaling force in a previous rotation of said crankshaft, the torque peak value of said composite torque cancels the phase difference.

2. An electric power assisted bicycle according to claim 1, wherein said assist amount control section continuously executes configuration of the driving force assist amount when there is the phase difference.

3. An electric power assisted bicycle according to claim 1, wherein the driving force assist amount is configured by a phase which is determined in accordance with a map memorizing a relationship between the crank rotational frequency and the phase and by the driving force which is calculated based on the pedaling force.

4. An electric power assisted bicycle according to claim 1, wherein said assist amount control section comprises a means for verifying a misdetection of the phase difference, and wherein at the time of verification of the misdetection, the driving force assist amount in proportion to the pedaling force calculated by said pedaling force sensor is generated in response to the phase of the crank angle detected by said crank angle sensor.

5. An electric power assisted bicycle according to claim 1, wherein, when the crank rotational frequency is less than a predetermined value, said assist amount control section generates the driving force assist amount in proportion to the pedaling force calculated by said pedaling force sensor in response to the phase of the crank angle detected by said crank angle sensor.

## Patentansprüche

1. Elektrisches, antriebskraftunterstütztes Fahrrad, aufweisend:
einen Pedalierkraft-Sensor (2) zum Erfassen einer Pedalierkraft, die an einem Pedal erzeugt wird;
einen Motor (5) zum Unterstützen einer Antriebskraft als Reaktion auf eine Ausgabe des Pedalierkraft-Sensor (2);
einen Unterstützungsmengensteuerabschnitt (10) um den Motor (5) zu erlauben, eine Antriebskraftunterstützungsmenge in Reaktion auf eine Phase eines Kurbelwinkels zu erzeugen, die entsprechend der Pedalierkraft, die durch den Pedalierkraft-Sensor (2) erfasst wird, eingerichtet ist, wenn eine Kurbeldrehfrequenz nicht weniger als ein vorgegebener Wert ist, wobei die Antriebskraftunterstützungsmenge, die für die Pedalierkraft vorgesehen ist, so eingerichtet ist, dass ein zusammengesetztes Drehmoment aus der Antriebskraftunterstützungsmenge und der Pedalierkraft einen Drehmomentspitzenwert bei einer Phase von 90° verursacht, wenn ein oberer Todpunkt des Pedals basierend auf der Kurbelwelle 0° ist;
**dadurch gekennzeichnet, dass**
das elektrische, antriebskraftunterstützte Fahrrad weiterhin aufweist:
einen Kurbelwinkelsensor (3) zum Erfassen des Kurbelwinkels einer Kurbelwelle, die mit dem Pedal verbunden ist;
ein Kurbel-Drehfrequenz-Berechnungsmittel (14) zum Berechnen der Drehfrequenz der Kurbelwelle aus dem Kurbelwinkel; und dass
die Antriebskraftunterstützungsmenge in einem solchen Zustand der Antriebskraftunterstützungsmenge und der Phase angewendet wird, dass in dem Fall, in dem der Drehmomentspitzenwert eine Phasendifferenz relativ zu einer Zwischenposition zwischen dem oberen Todpunkt des Pedals und dem unteren Todpunkt des Pedals hat, wenn eine Drehmomentkurve der Pedalierkraft in einer vorangehenden Umdrehung der Kurbelwelle erfasst wird, der Drehmomentspitzenwert des zusammengesetzten Drehmoments die Phasendifferenz ausgleicht.

2. Elektrisches, antriebskraftunterstütztes Fahrrad gemäß Anspruch 1, wobei der Unterstützungsmengenkontrollabschnitt kontinuierlich eine Konfiguration der Antriebskraftunterstützungsmenge ausführt, wenn eine Phasendifferenz vorhanden ist.

3. Elektrisches, antriebskraftunterstütztes Fahrrad gemäß Anspruch 1, wobei die Antriebskraftunterstützungsmenge nach einer Phase bemessen wird, die übereinstimmend mit einem Kennfeld, das ein Verhältnis zwischen der Kurbeldrehfrequenz und der Phase speichert, und durch die Antriebskraft, die basierend auf der Pedalierkraft berechnet wird.

4. Elektrisches, antriebskraftunterstütztes Fahrrad gemäß Anspruch 1, wobei der Unterstützungsmengenkontrollabschnitt Mittel zum Verifizieren einer Falschdedektion der Phasendifferenz umfasst, und wobei zu dem Zeitpunkt der Verifikation der Falschdedektion die Antriebskraftunterstützungsmenge im Verhältnis zu der Pedalierkraft, die durch den Pedalierkraftsensor berechnet wird, als Reaktion auf die Phase des Kurbelwinkels erzeugt wird, der durch den Kurbelwinkelsensor erfasst wird.

5. Elektrisches, antriebskraftunterstütztes Fahrrad gemäß Anspruch 1, wobei, wenn die Kurbeldrehfrequenz kleiner ist als ein vorgegebener Wert, der Unterstützungsmengensteuerabschnitt die Antriebskraftunterstützungsmenge im Verhältnis zu der Pedalierkraft erzeugt, die durch den Pedalierkraftsensor als Reaktion auf die Phase des Kurbelwinkels berechnet wird, der durch den Kurbelwinkelsensor erfasst wird.

## Revendications

1. Bicyclette à assistance électrique comprenant :
un capteur de force de pédalage (2) pour détecter une force de pédalage générée au niveau d'une pédale ;
un moteur (5) pour assister une force d'entraînement en réponse à une sortie dudit capteur de force de pédalage (2) ;
une section de régulation de quantité d'assistance (10) pour permettre audit moteur (5) de générer une quantité d'assistance de force d'entraînement configurée par rapport à la force de pédalage détectée par ledit capteur de force de pédalage (2), en réponse à une phase d'un angle de manivelle, lorsqu'une fréquence de rotation de manivelle n'est pas inférieure à une valeur prédéterminée, dans laquelle la quantité d'assistance de force d'entraînement prévue pour la force de pédalage est configurée de sorte qu'un couple composite de la quantité d'assistance de force d'entraînement et de la force de pédalage amène une valeur crête de couple dans une phase de 90 degrés lorsqu'un point mort haut de ladite pédale d'après ledit vilebrequin est de 0 degré ;
**caractérisée en ce que**
la bicyclette à assistance électrique comprend en outre :
un capteur d'angle de manivelle (3) pour détecter ledit angle de manivelle d'un vilebrequin relié à ladite pédale ;
un moyen de calcul de fréquence de rotation de manivelle (14) pour calculer ladite fréquence de rotation dudit vilebrequin à partir de l'angle de manivelle ; et **en ce que**
la quantité d'assistance de force d'entraînement est appliquée dans une condition de la quantité d'assistance de force d'entraînement et de la phase telle que dans le cas où la valeur crête de couple a un déphasage par rapport à une position intermédiaire entre le point mort haut de ladite pédale et un point mort bas de ladite pédale lors de la détection d'une courbe de couple de la force de pédalage dans une rotation précédente dudit vilebrequin, la valeur crête de couple dudit couple composite annule le déphasage.

2. Bicyclette à assistance électrique selon la revendication 1, dans laquelle ladite section de régulation de quantité d'assistance exécute en continu une configuration de la quantité d'assistance de force d'entraînement lorsqu'il y a le déphasage.

3. Bicyclette à assistance électrique selon la revendication 1, dans laquelle la quantité d'assistance de force d'entraînement est configurée par une phase qui est déterminée conformément à une carte mémorisant une relation entre la fréquence de rotation de manivelle et la phase et par la force d'entraînement qui est calculée d'après la force de pédalage.

4. Bicyclette à assistance électrique selon la revendication 1, dans laquelle ladite section de régulation de quantité d'assistance comprend un moyen de vérification d'une détection par erreur du déphasage, et dans laquelle au moment de la vérification de la détection par erreur, la quantité d'assistance de force d'entraînement proportionnellement à la force de pédalage calculée par ledit capteur de force de pédalage est générée en réponse à la phase de l'angle de manivelle détecté par ledit capteur d'angle de manivelle.

5. Bicyclette à assistance électrique selon la revendication 1, dans laquelle, lorsque la fréquence de rotation de manivelle est inférieure à une valeur prédéterminée, ladite section de régulation de quantité d'assistance génère la quantité d'assistance de force d'entraînement proportionnellement à la force de pédalage calculée par ledit capteur de force de pédalage en réponse à la phase de l'angle de manivelle détecté par ledit capteur d'angle de manivelle.
